# FASCICULE DE BREVET EUROPEEN

(11) **EP 2 586 989 B1**
(45) Date de publication et mention de la délivrance du brevet: **29.04.2015**
(21) Numéro de dépôt: 11186969.9
(22) Date de dépôt: 27.10.2011
(51) Int. Cl.: F04D 29/02, B29C 45/16, F01D 9/04, F01D 11/12, F04D 29/54

(54) **Virole composite co-injectée de compresseur de turbomachine axiale**
Koinjizierter Verbundring eines Kompressors eines axialen Turbotriebwerks
Co-injected composite shroud of an axial turbomachine compressor

(43) Date de publication de la demande: 01.05.2013
(73) Titulaire: Techspace Aero S.A., 4041 Herstal (Milmort) (BE)
(72) Inventeur: Brassine, Christine, 4550 Nandrin (BE); Wery, Xavier, 4000 Liège (BE)
(74) Mandataire: Lecomte & Partners

(56) Documents cités:
- EP-A1- 2 075 414
- EP-A1- 2 202 264
- EP-A2- 1 705 341
- DE-A1- 10 259 963

## Description

### Domaine technique

L'invention a trait au domaine des viroles de stator de turbomachine axiale. Plus particulièrement l'invention a trait au domaine des viroles segmentées en matériau composite comprenant notamment un polymère. Plus particulièrement, l'invention a trait au domaine des viroles de stator de compresseur de turbomachine axiale. L'invention a trait à un segment d'un telle virole, à une telle virole et à un procédé de fabrication des segments.

### Technique antérieure

Le document de brevet EP 2 196 629 A1 divulgue une virole interne segmentée d'un compresseur de turbomachine axiale. La virole présente la particularité que les extrémités des segments constituant la virole présentent des profils correspondant aux profils des aubes de manière à épouser les aubes au niveau des jonctions entre les segments lors de l'assemblage de la virole sur le compresseur. La liaison entre les aubes et ces profils est assurée par l'application manuelle d'élastomère. Il en va de même pour la liaison entre les aubes et les ouvertures réparties le long des segments et recevant les aubes. Cette opération requiert par conséquent une intervention manuelle coûteuse en temps lors de l'assemblage du compresseur. Une fois que la virole est assemblée, du matériau abradable est projeté sur la surface interne de la virole afin d'assurer une étanchéité avec les léchettes du rotor du compresseur. Un sablage de la surface interne de la virole ainsi que l'application d'un primaire sont requis au préalable afin d'assurer un accrochage satisfaisant du matériau abradable sur la virole. Cette opération est également coûteuse en temps.

Le document de brevet US 4,655,682 divulgue une virole interne d'un compresseur de turbomachine axiale. La virole est en matériau composite et comprend un anneau unitaire et des segments rapportés sur l'anneau. Du silicone est appliqué entre les extrémités des aubes et les logements correspondants des segments. Similairement à l'enseignement précédent, cette opération manuelle d'application de silicone est coûteuse en temps. L'anneau est une structure laminée comprenant des couches de fibres polyamides imprégnées d'une résine époxy. Similairement à l'enseignement précédent, un sablage de la surface interne de l'anneau ainsi que l'application d'un primaire sont requis au préalable afin d'assurer un accrochage satisfaisant du matériau abradable sur l'anneau.

Le document de brevet EP 2 202 264 A1 divulgue un procédé de fabrication d'un segment de virole conforme au préambule de la revendication 1.

### Résumé de l'invention

### Problème technique

L'invention a pour objectif de proposer une solution à au moins un des inconvénients sus mentionnés. Plus particulièrement, l'invention a pour objectif de proposer une virole de stator de turbomachine en matériau non métallique, qui soit économique et simple à assembler.

### Solution technique

L'invention a pour objet un procédé de fabrication d'un segment de virole de stator à aubes de turbomachine axiale, comprenant un corps avec un profil général en arc de cercle et en un premier matériau polymère ; au moins une surface technique au niveau du corps et en un deuxième matériau polymère co-injecté avec le premier, le segment étant moulé par injection du premier matériau polymère et injection du deuxième matériau polymère, les injections des premier et deuxième matériaux étant coordonnées de manière à ce que l'un des premier et deuxième matériaux soit encore pâteux lorsque l'autre des premier et deuxième matériaux est mis en contact avec ledit un matériau, ; remarquable en ce que l'autre des premier et deuxième matériaux est au moins partiellement pâteux lorsqu'il est mis en contact avec le un des premier et deuxième matériaux, et le deuxième matériau comprend du silicone et/ou du téflon.

Le premier matériau peut être thermoplastique ou thermodurcissable. Il peut notamment comprendre du polyéthylénimine (PEI) ou du polyamide-imide (PAI). Le deuxième matériau peut également être thermoplastique ou thermodurcissable. Il peut comprendre du silicone et/ou du téflon. Préférentiellement, le deuxième matériau est de l'élastomère.

Selon un mode avantageux de l'invention, le deuxième matériau polymère présente une dureté inférieure à celle du premier matériau polymère, préférentiellement inférieure à 80% de la dureté du premier matériau.

Selon un autre mode avantageux de l'invention, la surface technique ou au moins une des surfaces techniques correspond à une face intérieure de la virole et le deuxième matériau polymère la constituant comprend majoritairement du silicone.

Avantageusement, la virole forme un ruban annulaire et les segments forment des tronçons dudit ruban. Avantageusement, la section transversale du segment et de la virole en général est en forme de U avec les jambes du U dirigées vers le centre de la virole. Le creux du U forme ainsi un volume destiné à recevoir l'abradable.

Selon un encore autre mode avantageux de l'invention, la surface technique ou au moins une des surfaces techniques correspond à une face latérale de la virole et le deuxième matériau polymère la constituant comprend majoritairement du téflon.

Avantageusement, la face latérale est une face avant et/ou une face arrière (selon la direction d'écoulement du fluide dans la turbomachine). Elle peut être annulaire et/ou dans un plan généralement perpendiculaire à l'axe de rotation de la turbomachine.

Selon un encore autre mode avantageux de l'invention, la surface technique ou au moins une des surfaces techniques est une surface destinée à épouser le profil d'une aube du stator et le deuxième matériau polymère la constituant est apte à assurer un contact étanche avec ladite aube, le deuxième matériau comprenant préférentiellement du silicone. En d'autres termes, la surface technique correspond à une surface de liaison de l'aube avec le segment.

Selon un encore autre mode avantageux de l'invention, la surface technique présente un profil transversal en forme de lèvre de manière à pouvoir se déformer au contact de l'aube lors du montage de la virole.

Selon un encore autre mode avantageux de l'invention, la surface technique ou au moins une des surfaces techniques est une surface à une extrémité du segment selon son profil en arc de cercle, ladite surface correspondant à un profil d'aube.

Selon un encore autre mode avantageux de l'invention, le segment comprend au moins une ouverture destinée à recevoir une aube du stator selon une direction généralement radiale, la surface technique ou au moins une des surfaces techniques étant située dans l'ouverture, en vis-à-vis de la surface de l'aube. En d'autres termes, la surface technique correspond à une surface de liaison de l'aube avec le segment.

Selon un encore autre mode avantageux de l'invention, le segment comprend plusieurs ouvertures réparties le long du profil en arc de cercle du segment, chacune des ouvertures étant destinée à recevoir une aube du stator selon une direction généralement radiale. Le segment peut comprendre au moins 3, préférentiellement au moins 4, plus préférentiellement encore au moins 5 ouvertures.

Selon un autre mode avantageux de l'invention, le deuxième matériau est injecté après le premier matériau.

Selon un encore autre mode avantageux de l'invention, le segment est moulé par injection dans un moule formant une cavité constante.

Selon un encore autre mode avantageux de l'invention, le segment est moulé par injection dans un moule formant une cavité variable, la partie variable du moule correspondant à la ou à au moins une des surfaces techniques.

### Avantages apportés

Les mesures de l'invention permettent de réaliser plusieurs surfaces techniques sur la virole directement lors du moulage des segments qui la composent. La co-injection permet une cohésion optimale entre le matériau du corps du segment et le ou les matériaux de la ou des surfaces techniques qui est/sont co-injectée(s) avec le corps du segment.

### Brève description des dessins

La figure 1 est une vue partielle en coupe d'un compresseur axial où figure, entre autres, une virole interne selon l'invention.
La figure 2 est une vue en perspective d'une partie de la virole segmentée de la figure 1, conforme à l'invention.
La figure 3 est une vue en coupe d'un tronçon de la virole de la figure 1, au droit d'une aube, à la jonction entre deux segments ou dans une des ouvertures réparties le long d'un segment, la figure 3 correspondant à un premier mode de réalisation de l'invention.
La figure 4 est une vue coupe similaire à la figure 3, correspondant toutefois à un deuxième mode de réalisation de l'invention.
La figure 5 est une vue en coupe d'un moule lors de la première étape de fabrication d'un segment de virole, selon un procédé conforme à un premier mode de réalisation de l'invention.
La figure 6 est une vue en coupe d'un moule lors de la deuxième étape de fabrication d'un segment de virole, selon un procédé conforme à un premier mode de réalisation de l'invention.
La figure 7 est une vue en coupe d'un moule lors de la première étape de fabrication d'un segment de virole, selon un procédé conforme à un deuxième mode de réalisation de l'invention.
La figure 8 est une vue en coupe d'un moule lors de la deuxième étape de fabrication d'un segment de virole, selon un procédé conforme à un deuxième mode de réalisation de l'invention.

### Description des modes de réalisation

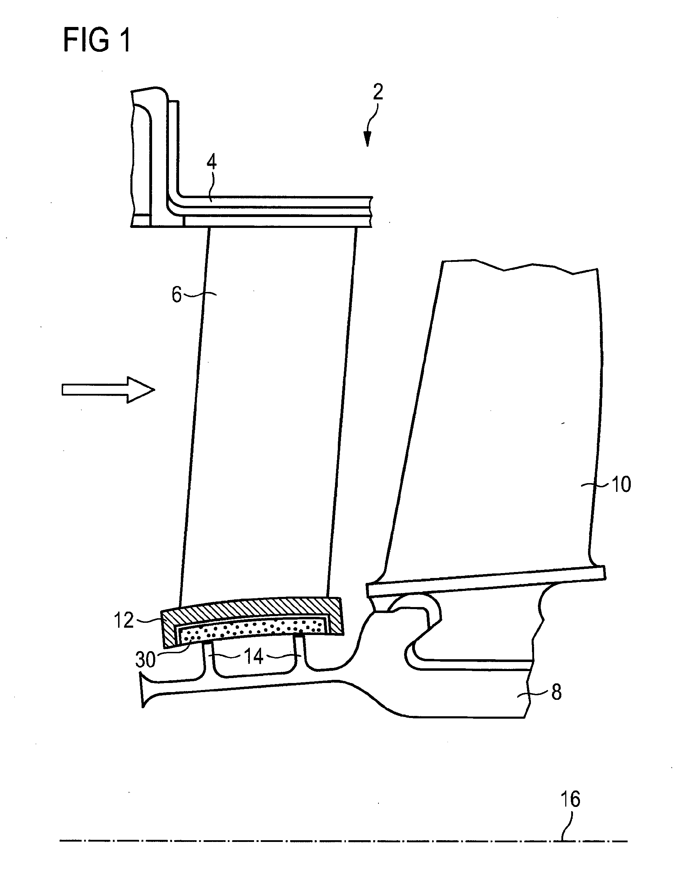

La figure 1 illustre une vue en coupe d'une partie d'un compresseur axial 2, typiquement de moteur à réaction ou moteur à turbine. Le compresseur 2 comporte un rotor 8 tournant autour de l'axe 16. Le rotor comporte une série d'aubes 10 fixées sur sa circonférence, correspondant à un étage du compresseur. La direction et le sens d'écoulement du fluide à comprimer est illustré par la flèche. Le carter 4 ou encore stator du compresseur comporte une série d'aubes 6 fixées à leurs bases. Cette série d'aubes constitue un redresseur de la veine fluide située entre deux rangées d'aubes de la roue mobile, la rangée amont n'étant pas représentée. Une rangée d'aube de la roue mobile et la grille redresseur en aval constituent un étage du compresseur. Les extrémités intérieures des aubes 6 sont liées à une virole 12. La virole a une forme générale d'anneau circulaire épousant le rotor 8. La virole 12 délimite ainsi la partie inférieure ou interne de la veine fluide annulaire traversant le redresseur. Elle est maintenue en place par les aubes et assure une étanchéité avec le rotor 8. La virole comporte sur sa face intérieure une couche de matériau friable communément désigné abradable 30. Le rotor 8 comporte deux nervures circonférentielles ou plus couramment désignées léchettes 14 coopérant avec la couche de matériau abradble 30. Ce dernier est appliqué et ensuite usiné de sorte à présenter une surface d'étanchéité coopérant avec les léchettes 14. Ce matériau a des propriétés de friction avec le métal des léchettes et a la capacité de se désagréger en fine poussière en cas de contact avec les léchettes lorsque le rotor est en rotation. Les léchettes 14 et la surface en matériau abradable constituent ainsi un labyrinthe d'étanchéité.

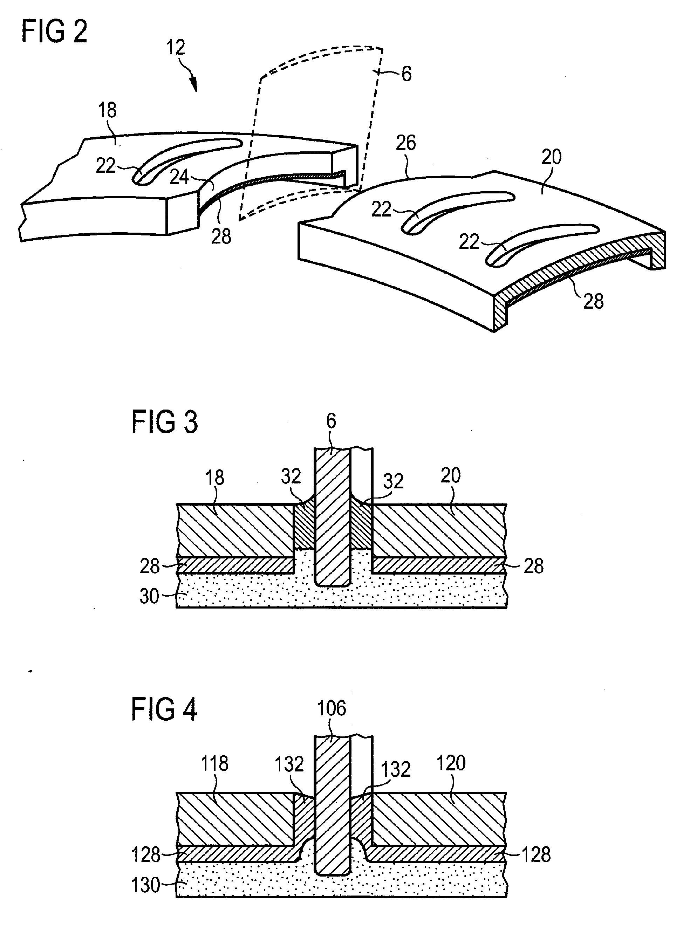

La construction et l'assemblage de la virole selon l'invention sont illustrés à la figure 2. La virole 12 est constituée de plusieurs segments dont deux 18 et 20 sont représentés à la figure 2. Ces segments sont en principe tous similaires et au nombre de deux ou plus. Le nombre de segments peut être choisi librement sur base de différents critères tels que le diamètre de la virole à construire, le matériau utilisé et le nombre d'aubes du redresseur. La section transversale des segments est généralement en forme de « U » renversé. Elle comporte une base généralement plate bien que profilée d'un point de vue aérodynamique, cette partie plate formant un ruban circulaire lorsque la virole est formée par assemblage de tous ses segments. Elle comporte un bord amont et un bord aval par rapport à la direction d'écoulement du fluide. Sa largeur, du bord amont au bord aval, est essentiellement constante. La section transversale des segments comporte également deux parties courtes dirigées vers le bas ou encore vers l'intérieur du ruban circulaire formé par la base, chacune étant au niveau d'un des bords amont et aval. Elles sont au moins approximativement perpendiculaires à la partie dite plate et de hauteur généralement constante.

Chaque segment 18, 20 comporte des ouvertures 22 pratiquées dans la surface de la partie dite plate. Ces ouvertures sont réparties le long de l'arc de cercle décrit par les segments. L'espacement entre ces ouvertures est dicté par la position des aubes, ces dernières étant rigidement fixées ou encore encastrées au stator. Typiquement, chaque aube comporte à son extrémité haute une base formant une plate-forme, cette plate-forme étant alors positionnée dans une ouverture correspondante du stator pour y être liée par soudure. Typiquement, les aubes sont toutes identiques et sont espacées de manière constante le long de la périphérie du stator et de la virole. D'autres agencements sont cependant possibles et n'altèrent en rien le principe de l'invention. Le profil des ouvertures correspond au profil des aubes au niveau de la virole, c'est-à-dire au niveau inférieur des aubes. Une certaine tolérance est cependant prévue permettant une mise en place aisée des segments sur les aubes. Les segments de virole sont dimensionnés de sorte à ce que les extrémités inférieures des aubes puissent pénétrer les ouvertures 22 lors de la mise en place des segments en vue de former la virole. En fonction du design choisi, les extrémités des aubes peuvent soit affleurer la face interne de la partie dite plate des segments ou encore dépasser légèrement de sorte à être en saillie par rapport à cette face interne, cette saillie ne dépassant pas les extrémités des bords amont et aval. Les ouvertures 22 sont plus ou moins centrées sur les segments par rapport à l'axe de la machine, c'est-à-dire que les distances mesurées selon l'axe de la machine entre chaque extrémité de l'ouverture 22 et le bord correspondant sont essentiellement égales. Un décalage des ouvertures selon l'axe de la machine par rapport à cette position centrée est envisageable pour autant que les ouvertures n'empiètent pas sur les branches des bords amont et aval.

L'extrémité du segment 18 est profilée de sorte à épouser l'aube 6 située au niveau de la jonction entre les segments 18 et 20. Il en va de même pour l'extrémité du segment 20. En effet, les segments 18 et 20 comportent, chacun, une partie 24 et 26, respectivement, dont le profil correspond à celui de l'aube 6. Les extrémités des segments 18 et 20 comportent également, outre les parties 24 et 26 correspondant à l'aube, des zones de part et d'autres des parties 24 et 26 dont les profils se correspondent en vue de fermer la jonction en amont et aval de l'aube. Ces zones de la jonction en amont et aval de l'aube sont rectilignes. La jonction en amont de l'aube (à gauche à la figure 2) est inclinée par rapport au bord de la virole ainsi formée, et ce avec un angle d'environ 45 °.

Les deux parties courtes dirigées vers le bas ou encore vers l'intérieur du ruban circulaire formé par la base de la virole constituent avec la face intérieure de la partie dite plate un espace ou volume apte à recevoir après assemblage de la virole l'application sous forme liquide ou pâteuse d'un matériau abradable.

La surface intérieure 28 du ruban formé par la virole 12 est une surface technique dans la mesure où elle est destinée à servir de surface d'accrochage de l'abradable qui va y être appliqué.

La surface intérieure 28 est constituée d'une couche d'un matériau autre de celui constituant le corps des segments 18 et 20 de la virole 12. Plus précisément, cette couche est faite d'un matériau comprenant au moins majoritairement du silicone qui est co-injecté avec le matériau constitutif du segment lors de la fabrication de ce dernier. Le segment est en matériau polymère, préférentiellement en matériau composite comprenant des fibres de carbone et/ou de verre et un liant polymère. Ce dernier peut être du type thermodurcissable ou thermoplastique. Il présente une dureté et une rigidité apte à conférer au segment une stabilité structurelle requise par sa fonction qui est bien connue en soi de l'homme de métier. Les matériaux abradables destinés à être projetés ou surmoulés sont pour la plupart constitués d'une base aluminium-silicone pouvant comprendre, en outre, des composés polymères jouant le rôle d'additif. La présence d'une surface comprenant au moins partiellement et préférentiellement au moins majoritairement du silicone la rend naturellement compatible chimiquement avec un revêtement abradable à base de silicone.

La co-injection est un procédé d'injection de plusieurs polymères de natures différentes dans le même moule. Plus précisément, la co-injection permet une cohésion optimale entre les différents matériaux constituant l'objet co-injecté dans la mesure où les matériaux polymères de natures différentes entrent en contact dans le moule lorsqu'ils sont encore au moins partiellement pâteux.

La dureté du silicone est habituellement comprise entre 20° et 80° Shore A alors que la dureté du matériau du segment est comprise entre 80° et 100 ° Shore.A

La figure 3 est une vue en coupe d'un tronçon de la virole 12 de la figure 2 selon un premier mode de réalisation de l'invention. La figure 3 correspond à une coupe au niveau de la jonction entre deux segments. Il est à noter qu'elle peut pareillement correspondre à une coupe au niveau d'une des ouvertures 22 d'un des segments. On peut observer que l'aube 6 est solidarisée et étanchéifiée avec la virole au moyen de joints ou cordons d'élastomère appliqués manuellement. La surface en silicone 28 sur la face intérieure de la virole sert de surface d'accrochage à l'abradable 30.

La figure 4 est une vue en coupe d'un tronçon de la virole, qui correspond à celui de la figure 3. Il illustre cependant un deuxième mode de réalisation de l'invention où les surfaces en vis-à-vis des surfaces profilées de l'aube sont également pourvues d'une surface technique en forme de lèvre souple 132 co-injectée également avec le matériau constitutif des segments. Cette surface permet d'éviter l'opération d'application manuelle du matériau élastomère assurant l'étanchéité entre l'aube et la virole. Dans le cas précis de la figure 4, il est à noter que cette surface technique 132 est jointive avec la surface technique 128 sur la face intérieure de la virole. Ces surfaces techniques ne doivent pas nécessairement être jointives ; elles peuvent en effet être réalisées de manière séparée et également éventuellement en des matériaux différents.

Similairement à la figure 3, il est à noter que l'illustration de la figure 4 peut pareillement correspondre à une coupe au niveau d'une des ouvertures 22 d'un des segments.

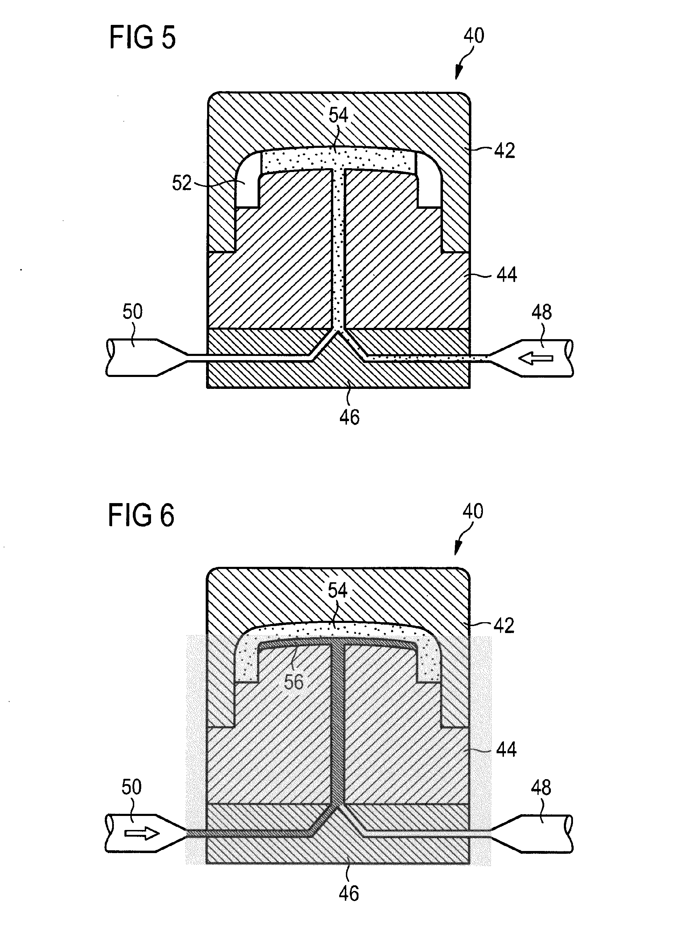

Les figures 5 et 6 illustrent un premier mode de fabrication d'un segment de virole selon l'invention. La figure 5 illustre une première étape alors que la figure 6 illustre une deuxième étape. Le moule 40 comprend une première partie 42 et une deuxième partie 44 formant ensemble une cavité 52 dont la forme correspond essentiellement à celle du segment de virole que l'on désire obtenir. Le moule 40 comprend également une base 46 servant la distribution des matières premières à injecter. A cette dernière sont reliés un premier injecteur 48 pour la matière constitutive du segment, et un deuxième injecteur 50 pour la matière constitutive de la surface technique.

Dans la première étape illustrée à la figure 5, la matière constitutive du segment est injectée via l'injecteur 48 dans le moule jusqu'à un certain point, plus particulièrement jusqu'à atteindre un certain taux de remplissage de la cavité 52.

Dans la deuxième étape illustrée à la figure 6, la matière de la surface technique à former est injectée via l'injecteur 50 dans le moule. Cette matière 56 vient en contact avec la première matière 54 qui est encore pâteuse et la pousse vers les extrémités de la cavité. Elle remplit ensuite une partie de la cavité, centrée sur l'orifice d'alimentation et délimitée par la surface correspondante du moule 40. Elle forme ainsi une couche sous la face inférieure du premier matériau.

Il à noter que l'illustration qui vient d'être décrite en relation avec les figures 5 et 6 est volontairement simplifiée à des fins de clarté d'exposé. En effet, l'homme de métier reconnaitra, entre autres, que le moule devra présenter une géométrie adaptée à la forme arquée du segment et que plusieurs conduits d'alimentation en matière première pourront être nécessaires. Leur répartition ainsi que notamment les paramètres d'injection pourront être obtenus par des processus de mise au point courants pour l'homme de métier.

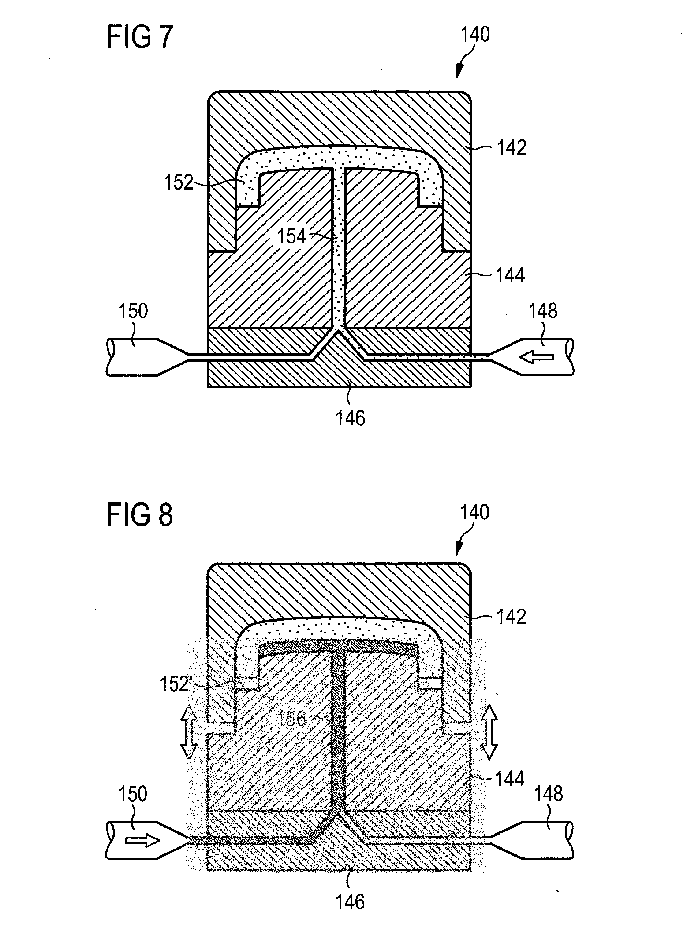

Les figures 7 et 8 illustrent un deuxième mode de fabrication d'un segment de virole selon l'invention. La figure 7 illustre une première étape alors que la figure 8 illustre une deuxième étape. Le moule 140 est généralement similaire au moule 40 des figures 5 et 6. Il comprend essentiellement une première partie 142 et une deuxième partie 144 formant ensemble une cavité 152 à volume variable et dont la forme correspond essentiellement à celle du segment de virole que l'on désire obtenir. Le moule 140 comprend également une base 146 servant la distribution des matières premières à injecter. A cette dernière sont reliés un premier injecteur 148 pour la matière constitutive du segment, et un deuxième injecteur 150 pour la matière constitutive de la surface technique.

La variabilité de la cavité 152 est assurée par une capacité des première et deuxième parties 142 et 144 du moule 140 à se déplacer l'une par rapport à l'autre, ce déplacement entrainant un changement du volume de la cavité. A la première étape illustrée à la figure 7, la cavité présente un premier volume correspondant plus ou moins exactement au volume de la partie structurelle du segment, à savoir à la partie du segment qui doit être constituée de la matière première 154. A la deuxième étape illustrée à la figure 8, la cavité 152' a changé, elle présente maintenant un volume augmenté, libérant ainsi un espace sous la face inférieure du segment déjà partiellement formé à la première étape. Cet espace peut ainsi être rempli par la matière première 156 constitutive de la surface technique. En raison de la géométrie choisie, cette matière va exclusivement remplir cet espace et former ainsi une couche mince de cette matière, cette couche mince étant co-injectée avec la matière 154 de la partie structurelle du segment. Tout comme dans l'exemple de fabrication des figures 5 et 6, lors de son injection dans le moule, la matière 156 de la surface technique entre en contact avec la matière 154 de la partie structurelle du segment lorsque cette dernière est encore pâteuse ou encore apte à assurer une cohésion du type moléculaire entre les deux matières.

Similairement au premier mode de fabrication du segment détaillé en relation avec les figures 5 et 6, il à noter que l'illustration qui vient d'être décrite en relation avec les figures 7 et 8 est également volontairement simplifiée à des fins de clarté d'exposé.

Il est également à noter que la variabilité de la cavité du moule pour la co-injection des matières respectives du segment à proprement parler et sa ou ses surfaces techniques, peut être réalisée différemment que suivant le principe décrit en relation avec les figures 7 et 8. En effet, en lieu et place d'un mouvement de translation d'au moins un des éléments du moule par rapport au reste du moule, il est également envisageable de prévoir un remplacement d'une partie du moule formant une partie de la cavité par une autre partie de moule qui va modifier la cavité ainsi formée. Ce remplacement peut notamment se faire par un mouvement de rotation. Ce principe est connu en soi par l'homme de métier.

De manière générale, il est à noter qu'un segment ou chaque segment de la virole peut comprendre plusieurs surfaces techniques co-injectées avec la matière constitutive du corps du segment. Comme cela a été décrit en relation avec les figures 2, 3 et 4, ces surfaces techniques peuvent se situer au niveau des surfaces de contact avec les aubes, ainsi que sur la face intérieure du segment. Le matériau de chacune de ces surfaces est alors choisi selon la fonction de ladite surface. Une face latérale avant ou arrière de la virole peut également constituer une surface technique. En effet, une telle face peut être susceptible d'entrer en contact avec une surface correspondante du stator. Cela peut notamment être le cas pour le dernier étage d'un compresseur basse-pression où la face arrière peut, en fonction des paramètres de fonctionnement de la turbomachine, entrer en contact par friction avec une surface annulaire et correspondante liée au carter. Dans ce cas, il est intéressant de prévoir cette surface technique en un matériau compatible au frottement sec, comme notamment du téflon, que l'on co-injecte avec la matière structurelle des segments, similairement à ce qui été décrit précédemment.

### Liste des signes de référence

- 2 :: portion de compresseur
- 4:: carter
- 6, 106 :: aube statorique
- 8 :: rotor
- 10 :: aube rotorique
- 12 :: virole interne
- 14 :: léchettes
- 16 :: axe de rotation du rotor
- 18, 118 :: premier segment de virole
- 20, 120 :: deuxième segment de virole
- 22 :: ouverture de réception d'aube
- 24 :: extrémité profilée du premier segment de virole
- 26 :: extrémité profilée du deuxième segment de virole
- 28, 128 :: surface d'accrochage de l'abradable
- 30, 130 :: abradable
- 32, 132 :: joint élastomère extrudé manuellement
- 40, 140 :: moule
- 42, 142 :: première partie de moule
- 44, 144 :: deuxième partie de moule
- 46, 146 :: base du moule
- 48, 148 :: premier injecteur
- 50, 150 :: deuxième injecteur
- 52, 152 :: cavité du moule
- 54, 154 :: matière première structurelle du segment
- 56, 156 :: matière première de la surface d'accrochage de l'abradable

## Revendications

1. Procédé de fabrication d'un segment de virole (12) de stator à aubes de turbomachine axiale, comprenant :
- un corps (18, 20 ; 118, 120) avec un profil général en arc de cercle et en un premier matériau polymère (54 ; 154) ;
- au moins une surface technique (28 ; 128, 132) sur le corps et en un deuxième matériau polymère (56, 156) co-injecté avec le premier (54 ; 154) ;
le segment étant moulé par injection du premier matériau polymère (54 ; 154) et injection du deuxième matériau polymère (56, 156), les injections des premier et deuxième matériaux étant coordonnées de manière à ce que l'un des premier et deuxième matériaux soit encore pâteux lorsque l'autre des premier et deuxième matériaux est mis en contact avec ledit un matériau ; **caractérisé en ce que**
l'autre des premier et deuxième matériaux est au moins partiellement pâteux lorsqu'il est mis en contact avec le un des premier et deuxième matériaux, et le deuxième matériau polymère comprend du silicone et/ou du téflon.

2. Procédé selon la revendication 1, **caractérisé en ce que** le deuxième matériau polymère présente une dureté inférieure à celle du premier matériau polymère, préférentiellement inférieure à 80% de la dureté du premier matériau.

3. Procédé selon l'une des revendications 1 ou 2, **caractérisé en ce que** la surface technique ou au moins une des surfaces techniques (28 ; 128) correspond à une face intérieure de la virole et le deuxième matériau polymère la constituant comprend majoritairement du silicone.

4. Procédé selon l'une des revendications 1 à 3, **caractérisé en ce que** la surface technique ou au moins une des surfaces techniques correspond à une face latérale de la virole et le deuxième matériau polymère la constituant comprend majoritairement du téflon.

5. Procédé selon l'une des revendications 1 à 4, **caractérisé en ce que** la surface technique ou au moins une des surfaces techniques (132) est une surface destinée à épouser le profil d'une aube (106) du stator et le deuxième matériau polymère la constituant est apte à assurer un contact étanche avec ladite aube, le deuxième matériau comprenant préférentiellement du silicone.

6. Procédé selon la revendication 5, **caractérisé en ce que** la surface technique (132) présente un profil transversal en forme de lèvre de manière à pouvoir se déformer au contact de l'aube (106) lors du montage de la virole.

7. Procédé selon l'une des revendications 1 à 6, **caractérisé en ce que** la surface technique ou au moins une des surfaces techniques est une surface à une extrémité du segment selon son profil en arc de cercle, ladite surface correspondant à un profil d'aube.

8. Procédé selon l'une des revendications 1 à 7, **caractérisé en ce qu'**il comprend au moins une ouverture (22) destinée à recevoir une aube (6) du stator selon une direction généralement radiale, la surface technique ou au moins une des surfaces techniques étant située dans l'ouverture, en vis-à-vis de la surface de l'aube.

9. Procédé selon l'une des revendications 1 à 8, **caractérisé en ce qu'**il comprend plusieurs ouvertures (22) réparties le long du profil en arc de cercle du segment, chacune des ouvertures étant destinée à recevoir une aube (6) du stator selon une direction généralement radiale.

10. Procédé selon l'une des revendications 1 à 9, **caractérisé en ce que** le deuxième matériau (56, 156) est injecté après le premier matériau (54 ; 154).

11. Procédé selon l'une des revendications 1 à 10, **caractérisé en ce que** le segment est moulé par injection dans un moule (40) formant une cavité (52) constante.

12. Procédé selon l'une des revendications 1 à 11, **caractérisé en ce que** le segment est moulé par injection dans un moule (140) formant une cavité (152) variable, la partie variable du moule correspondant à la ou à au moins une des surfaces techniques.

## Patentansprüche

1. Verfahren für die Herstellung eines Ringsegments (12) eines Leitschaufelstators einer axialen Turbomaschine (2), mit
- einem Korpus (18, 20 : 118, 120) mit einem im Allgemeinen kreisbogenförmigen Profil aus einem ersten Polymermaterial (54 : 154);
- mindestens einer technischen Oberfläche (28 ; 128, 132) auf dem Korpus und aus einem zweiten Polymermaterial (56, 156), das mit dem ersten kospritzgegossen wird (54 ; 154);
wobei das Segment durch Spritzgießen des ersten Polymermaterials (54 ; 154) und Spritzgießen des zweiten Polymermaterials (56 ; 156) geformt wird und das Spritzgießen des ersten und des zweiten Materials so koordiniert wird, dass eines der beiden Materialien noch pastös ist, wenn das andere Material mit dem genannten ersten Material in Berührung kommt;
**dadurch gekennzeichnet dass**
das eine der beiden Materialien mindestens teilweise pastös ist, wenn es mit dem anderen der beiden Materialien in Berührung kommt und das zweite Polymermaterial Silikon und/oder Teflon enthält.

2. Verfahren nach Patentanspruch 1, **dadurch gekennzeichnet, dass** das zweite Polymermaterial eine geringere Härte als das erste Polymermaterial aufweist, die vorzugsweise weniger als 80% der Härte des ersten Polymermaterials beträgt.

3. Verfahren nach einem der Patentansprüche 1 oder zwei, **dadurch gekennzeichnet, dass** die technische Oberfläche oder mindestens eine der technischen Oberflächen (28; 128) einer Innenseite des Mantelrings entspricht und das zweite Polymermaterial, aus dem sie besteht, überwiegend Silikon enthält.

4. Verfahren nach einem der Patentansprüche 1 bis 3, **dadurch gekennzeichnet, dass** die technische Oberfläche oder mindestens eine der technischen Oberflächen einer Seitenfläche des Rings entspricht und das zweite Polymermaterial, aus dem sie besteht, überwiegend Teflon enthält.

5. Verfahren nach einem der Patentansprüche 1 bis 4, **dadurch gekennzeichnet, dass** die technische Oberfläche oder mindestens eine der technischen Oberflächen (132) eine Oberfläche ist, die dazu bestimmt ist, um sich dem Profil einer Leitschaufel (106) des Stators anzuschmiegen und das zweite Polymermaterial, aus dem sie besteht, in der Lage ist, einen dichten Kontakt mit der genannten Leitschaufel zu gewährleisten, wobei das zweite Material vorzugsweise Silikon enthält.

6. Verfahren nach Patentanspruch 5, **dadurch gekennzeichnet, dass** die technische Oberfläche (132) ein Querprofil in Form einer Lippe aufweist, so dass sie sich bei der Montage des Rings im Kontakt mit der Leitschaufel (106) verformen kann.

7. Verfahren nach einem der Patentansprüche 1 bis 6, **dadurch gekennzeichnet, dass** die technische Oberfläche oder mindestens eine der technischen Oberflächen eine Oberfläche an einem Ende des Segments ist, entsprechend dessen Kreisbogenprofil, wobei die genannte Oberfläche einem Leitschaufelprofil entspricht.

8. Verfahren nach einem der Patentansprüche 1 bis 7, **dadurch gekennzeichnet, dass** es mindestens eine Öffnung (22) beinhaltet, die dazu bestimmt ist, um eine Leitschaufel (6) des Stators in einer allgemein radialen Richtung aufzunehmen, wobei sich die technische Oberfläche oder mindestens eine der technischen Oberflächen in der Öffnung gegenüber der Oberfläche der Leitschaufel befindet.

9. Verfahren nach einem der Patentansprüche 1 bis 8, **dadurch gekennzeichnet, dass** es mehrere Öffnungen (22) beinhaltet, die entlang des Kreisbogenprofils des Segments verteilt sind, wobei jede der Öffnungen dafür bestimmt ist, um eine Leitschaufel (6) des Stators in einer allgemein axialen Richtung aufzunehmen.

10. Verfahren nach einem der Patentansprüche 1 bis 9, **dadurch gekennzeichnet, dass** das zweite Material (56, 156) nach dem ersten Material (54 ; 154) spritzgegossen wird.

11. Verfahren nach einem der Patentansprüche 1 bis 10, **dadurch gekennzeichnet, dass** das Segment mittels Spritzgießen in einer Form (40) geformt wird, die eine konstante Vertiefung (52) bildet.

12. Verfahren nach einem der Patentansprüche 1 bis 11, **dadurch gekennzeichnet, dass** das Segment mittels Spritzgießen in einer Form (140) geformt wird, die eine variable Vertiefung (152) bildet, wobei der variable Teil der Form der technischen Oberfläche oder mindestens einer der technischen Oberflächen entspricht.

## Claims

1. A method of manufacturing a bladed stator shell segment (12) of an axial turbomachine, comprising
- a body (18, 20; 118, 120) with a generally arcuate profile and made of a first polymeric material (54; 154);
- at least one working surface (28, 32 ; 128, 132) on the body and made of a second polymeric material injected with the first material;
wherein the segment is moulded by injecting the first polymeric material (54; 154) and injecting the second polymeric material (56; 156), the injection of the first and second materials being coordinated such that one of the first and second materials is still pasty when the other of the first and second materials is brought into contact with the material;
**characterized in that**
the other one of the first and second materials is at least partially pasty when brought into contact with the one of the first and second materials, and the second polymeric material comprises silicone and/or Teflon.

2. Method according to Claim 1, **characterized in that** the second polymeric material has a lower hardness than the first polymeric material, preferably less than 80% of the hardness of the first material.

3. Method according to one of Claims or 1 or 2, **characterized in that** the working surface or at least one of the working surfaces (28; 128) corresponds to an inner face of the shell and the second polymeric material of which it is made comprises predominantly silicone.

4. Method according to one of Claims 1 to 3, **characterized in that** the working surface or at least one of the working surfaces corresponds to a lateral face of the shell and the second polymeric material of which it is made comprises predominantly Teflon.

5. Method according to one of Claims 1 to 4, **characterized in that** the working surface or at least one of the working surfaces (132) is a surface intended to fit the profile of a stator blade (106) and the second polymeric material of which it is made is capable of ensuring a seal with the said blade, the second material preferably comprising silicone.

6. Method according to Claim 5, **characterized in that** the working surface (132) has a transverse lipped profile that can deform when in contact with the blade (106) when being mounted on the shell.

7. Method according to one of Claims 1 to 6, **characterized in that** the working surface or at least one of the working surfaces is a surface at one extremity of the segment along its arcuate profile, the said surface corresponding to a blade profile.

8. Method according to one of Claims 1 to 7, **characterized in that** it comprises at least one aperture (22) being able to house a stator blade (6) in a generally radial direction, the working surface or at least one of the working surfaces being located in the aperture with respect to the surface of the blade.

9. Method according to one of Claims 1 to 8, **characterized in that** it comprises several apertures (22) distributed along the arcuate profile of the segment, each of the apertures being able to house a stator blade (6) in a generally radial direction.

10. Method according to one of Claims 1 to 9, **characterized in that** the second material (56; 156) is injected after the first material (54; 154).

11. Method according to one of Claims 1 to 10, **characterized in that** the segment is moulded by injection in a mould (40) with a constant size cavity (52).

12. Method according to one of Claims 1 to 11, **characterized in that** the segment is moulded by injection in a mould (40) with variable volume cavity (152) the variable part of the mould corresponding to the, or at least one of the working surfaces.
